# EUROPEAN PATENT APPLICATION

(11) **EP 3 637 585 A1**
(43) Date of publication of application: **15.04.2020**
(21) Application number: 18199398.1
(22) Date of filing: 09.10.2018
(51) Int. Cl.: H02K 1/14, H02K 3/52, H02K 7/18

(54) **SEGMENTED STATOR FOR AN ELECTRIC GENERATOR**

(71) Applicant: Siemens Gamesa Renewable Energy A/S, 7330 Brande (DK)
(72) Inventor: Azar, Ziad, Sheffield, South Yorkshire S10 4ED (GB); Groendahl, Erik, 8653 Them (DK); Samanta, Subhra, 7430 Ikast (DK); Thomas, Arwyn, Cheshire, SK8 6HW (GB)
(74) Representative: Aspacher, Karl-Georg

(57) **Abstract**

A stator segment (10) for the stator (20) of an electrical generator (100) includes a segment body (11) and a coil winding (12) arranged in the segment body (11).

The segment body (11)circumferentially extends between at least a first end slot (21) and a second end slot (22), each of the first end slot (21) and of the second end slot (22) being circumferentially extended between at least a tooth (15) of the segment body (11) and a respective first side opening (31) and second side opening (32), the segment body (11) circumferentially spanning between the first side opening (31) and the second side opening (32), the coil winding (12) including a first side coil (41) and a second side coil (42) respectively housed in the first end slot (21) and in the second end slot (22).

The stator segment (10) includes at the first end slot (21) and the second end slot (22) at least two straps (71, 81) for respectively retaining the first side coil (41) and the second side coil (42) in the first end slot (21) and in the second end slot (22).

## Description

### Field of invention

The present invention relates to a segmented stator for a direct drive electrical generator, e.g. a direct drive electrical generator for a wind power turbine. The present invention also relates to a method of manufacturing a stator for an electric generator.

### Art Background

An electrical generator, such as an electric generator installed in a wind turbine, typically comprises a rotor which rotates relative to a stator.
The stator normally comprises a frame body longitudinally extending along a longitudinal axis and including a stator yoke and a plurality of teeth protruding according to a radial direction from the stator yoke. In the stator a plurality of slots are also defined, each slot being delimited circumferentially by two adjacent teeth and radially extending between the stator yoke and respective tooth radial ends. Each slot houses a respective winding.
In this technical field, it is further known to build direct drive electrical generators, in particular large direct drive electrical generators to be used in a wind power turbine, including a stator having a segmented structure. The stator segments may be arranged to cover for example an arc of 30, 60, 90, 120 degrees (or any other angle) along the circumferential direction of the stator. The stator segments are circumferentially joined together to form the stator (for example a stator may comprise six stator segments, each covering an arc of 60 degrees).
For such type of stator it may be desirable to use a concentrated winding topology.

Alternatively, a segmented stator with a double-layer distributed winding, i.e. a winding with two coils in the same slot, may be implemented.
It may be further desirable to manufacture segments already including the windings, to be joined together in a subsequent step of the manufacturing process to form the complete stator with windings.
The main inconvenience of such procedure is to secure mechanical support at the circumferential end of each segment. Due to the coil design topology, at each of its extreme circumferential ends the stator segment must comprise a respective slot and not a tooth. This happens because each coil from one slot has to enter the next adjacent slot. If half teeth were used at the extreme circumferential ends the stator, each half tooth to be joined to a correspondent half tooth of an adjacent segment, the slots of the stator segment adjacent to the half teeth would be half empty, as the empty half would have to include windings from the adjacent stator segment. The same if one slot would be provided at one circumferential end of the stator segment (with a tooth provided at the other circumferential end of the stator segment). This is obviously in contrast with the requirement of manufacturing complete segments already including the windings, to be joined together to form the complete stator.

Therefore, there is still a need to provide a stator design combining efficiently a concentrated winding topology or a double-layer distributed winding topology with a segmented design of the stator.

### Summary of the invention

This need may be met by the subject matter according to the independent claims. Advantageous embodiments of the present invention are described by the dependent claims.

According to a first aspect of the present invention, it is provided a stator segment for a stator of an electrical generator. The stator segment includes a segment body and a coil winding. The segment body circumferentially extends between at least a first end slot and a second end slot, each of the first end slot and of the second end slot being circumferentially extended between at least a tooth of the segment body and a respective first side opening and second side opening, the segment body circumferentially spanning between the first side opening and the second side opening, the coil winding including a first side coil and a second side coil respectively housed in the first end slot and in the second end slot. The stator segment includes at the first end slot and second end slot at least two straps for respectively retaining the first side coil and the second side coil in the first end slot and in the second end slot.
According to a second aspect of the present invention it is provided a method of manufacturing a stator of an electrical generator, the stator including a plurality of stator segments, each stator segments including a segment body and a coil winding, the method includes:
- manufacturing a plurality of segment bodies, the segment body circumferentially extending between at least a first end slot and a second end slot, each of the first end slot and of the second end slot being circumferentially extended between at least a tooth of the segment body and a respective first side opening and second side opening, the segment body circumferentially spanning between the first side opening and the second side opening,
- providing a coil winding in each segment body, the coil winding including a first side coil and a second side coil respectively housed in the first end slot and in the second end slot,
- providing at the first end slot and the second end slot at least a first strap and a second strap respectively for retaining the first side coil and the second side coil in the first end slot and in the second end slot,
- applying vacuum pressure impregnation to each of the segment bodies, to the respective coil winding and the respective straps for obtaining a respective segment,
- joining circumferentially together the plurality of segments obtained in the previous step, in such a way that a first end slot of one stator segment of the plurality of stator segments is adjacent to the second end slot of another stator segment of the plurality of stator segments.
The stator including a plurality of the above described stator segments or obtained according to the above described method may be in particular integrated in an electric generator for in a wind turbine.
Advantageously, according to the present invention, the side coils at the circumferential end slots find a convenient mechanical support during transportation, assembly or operation, by means of the straps provided for retaining each side coil in the respective end slot. Prior to the assembly in a stator of an electric generator, each of the stator segments may be conveniently obtained by applying a Vacuum Pressure Impregnation (VPI) process to each segment body including a respective coil winding and respective straps. When the VPI process is completed, each stator segment comprises two side coils securely held and protected in their respective end slots. This permits to conveniently handle the stator segments for transportation, for assembly in the stator and for operation.

In the present invention, as "strap" it is meant a thin band of material, which may by a non-conductive material, e.g. glass fiber or composite, or stainless steel, as further specified in the following.

According to different embodiments of the present invention, the coil winding may be a coil concentrated winding or a double-layer coil distributed winding.

According to embodiments of the invention, wherein the segment body longitudinally extends along a longitudinal axis of the stator segment and includes a plurality of stator axial portions, two adjacent stator axial portions being separated by a cooling duct for letting a cooling fluid flow in the cooling duct, at least one of the straps extending, at least partially, in a respective cooling duct. Particularly and advantageously, the first strap and/or the second strap may be oriented transversal to the longitudinal axis of the stator segment.
According to embodiments of the invention, at least one of the straps is configured in a closed loop and includes at least a first side extending through the respective cooling duct. Particularly, each strap may include:
- a respective first side and second side radially oriented and circumferentially distanced with respect to the longitudinal axis, the first side extending through the respective cooling duct and the second side being adjacent to the respective first side opening or second side opening,
- a respective third side and fourth side circumferentially oriented and radially distanced with respect to the longitudinal axis, the third side being adjacent to a stator yoke of the segment body and the fourth side being adjacent to a radial end of the segment body radially opposite to the stator yoke.
In particular, the straps may be made of a non-conductive material, e.g. glass fiber roving materials used for coil end supports in large electric machines or composite materials. Glass fiber roving can be attached together inside the segment structure by help of epoxy glue or sewing. Glass fiber roving absorbs resin during VPI process and become mechanically strong after curing. Stainless steel strap may be additionally welded together to secure it.

According to further embodiments of the invention, at least one of the straps is configured a spring active between a stator yoke of the segment body and a radial end of a tooth radially opposite to the stator yoke. In particular, such spring may be made of stainless steel.

In embodiments of the present invention, the stator segment comprises a plurality of straps at one or both of the end slot(s), the straps being distributed and distanced along the longitudinal axis for providing optimal support to the coils sides in the end slot(s).
Advantageously, a minimum number of straps should be used, the main support coming from sold resin of the VPI process.

In a stator comprising a plurality of stator segments according to present invention, at each segment gap between two stator segments, each strap of one stator segment is distanced along the longitudinal axis from each strap of the other stator segment. In particular, each stator segment includes at the first end slot and the second end slot a respective first plurality of straps and a second plurality of straps distributed along the longitudinal axis at the segment gap, the first plurality of straps being alternated to the second plurality of straps at the segment gap.
After assembly and due to manufacturing tolerance, the segment gap (e.g. 1 mm) insures there is no friction between coils. It has to be highlighted that during operation, the coil will be attracted toward the tooth, so the forces in neighbor coils are away from each other.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter, also any combination between features relating to different subject matters, in particular between features of the apparatus type claims and features of the method type claims, is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of a wind turbine including an electric generator with a stator according to the present invention.
- Figure 2: shows a front view orthogonal to an axial direction of a stator segment according to the present invention.
- Figure 3: shows a partial axonometric view of a segment stator for an electrical generator according to the present invention.
- Figure 4: shows a partial front view orthogonal to an axial direction of a detail of a stator segment according to the present invention.
- Figure 5: shows another partial front view orthogonal to an axial direction of another detail of a stator segment according to the present invention.
- Figure 6: shows a partial front view orthogonal to an axial direction of another embodiment according to the present invention of the detail of figure 5.
- Figure 7: shows a partial top longitudinal view, along the axial direction, of a stator according to the present invention including a plurality of the stator segments of figure 5.
- Figure 8: shows a partial top longitudinal view, along the axial direction, of another embodiment of a stator according to the present invention including a plurality of the stator segments of figure 6.

### Detailed Description

The illustrations in the drawings are schematic. It is noted that in different figures, similar or identical elements are provided with the same reference signs.

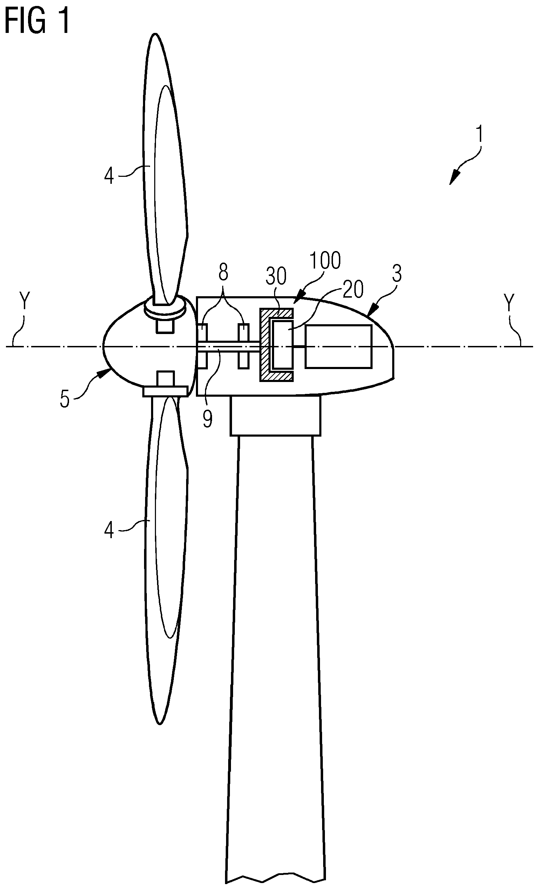

**Figure 1** shows a wind turbine 1 comprising a tower 2, which is mounted on a non-depicted fundament. A nacelle 3 is arranged on top of the tower 2.
The wind turbine 1 further comprises a wind rotor 5 having two, three or more blades 4 (in the perspective of Figure 1 only two blades 4 are visible). The wind rotor 5 is rotatable around a rotational longitudinal axis Y. When not differently specified, the terms axial, radial and circumferential in the following are made with reference to the rotational axis Y.
The blades 4 extend radially with respect to the rotational axis Y.
The wind turbine 1 comprises a permanent magnet electric generator 100.
The wind rotor 5 is rotationally coupled with the permanent magnet generator 100 either directly or by means of a rotatable main shaft 9 and through a gear box (not shown in Figure 1). A schematically depicted bearing assembly 8 is provided in order to hold in place the main shaft 9 and the rotor 5. The rotatable main shaft 9 extends along the rotational axis Y.
The permanent magnet electric generator 100 includes a stator 20 and a rotor 30. The rotor 30 is rotatable with respect to the stator 20 about the rotational axis Y.

The stator 20 comprises a plurality of stator segments 10.

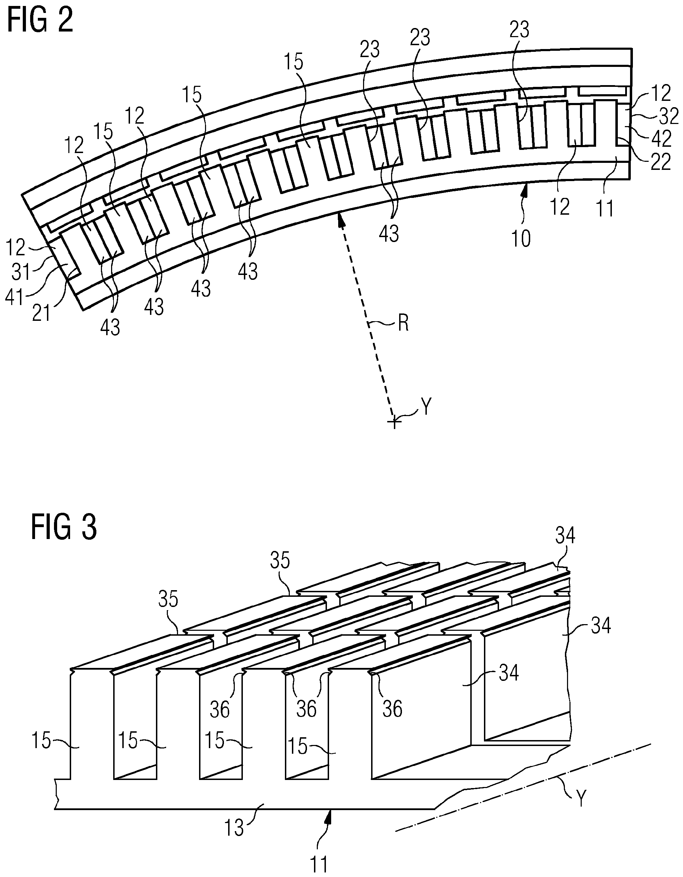

With reference to **Figures 2** and **3**, a stator segment 10 comprises a segment body 11 longitudinally extending along the longitudinal axis Y.
The segment body 11 comprises a stator yoke 13 and a plurality of teeth 15 protruding according to a radial direction R orthogonal to the longitudinal axis Y from the stator yoke 13 up to respective tooth radial ends, where notches 36 for respectively attaching a plurality of wedges (as better clarified in the following) are provided.
The stator segment 10 further comprises a plurality of intermediate slots 23, each slot 23 circumferentially extending between two respective teeth 15, a first end slot and a second end slot 22. The segment body 11 circumferentially extends between the first end slot 21 and the second end slot 22, each of the first end slot 21 and of the second end slot 22 being circumferentially extended between a respective tooth 15 (respectively, the first tooth 15 and the last tooth 15 of the stator segment 10) of the segment body 11 and a respective first side opening 31 and second side opening 32 of the segment body 11. The segment body 11 circumferentially spans between the first side opening 31 and the second side opening 32.
The stator segment 10 further comprises a coil winding 12 in the slots 21, 22, 23 of the segment body 11.
According to the different embodiments of a stator segment 10 according to the present invention, the stator segment 10 may include any number of intermediate slots 23 circumferentially comprised between the first end slot 21 and the second end slot 22. The circumferential extension of the first end slot 21 and the second end slot 22 is the half of the circumferential extension of the intermediate slot 23.
According to a possible embodiment of the present invention, the smallest version of the stator segment 10 according to the present invention includes only one tooth between the first end slot 21 and of the second end slot 22, i.e. without any intermediate slot 23.
The coil winding 12 may be a coil concentrated winding or, alternatively, a double-layer coil distributed winding.

The coil winding 12 is of the double layer type, including two coils 43 in each intermediate slot 23, a first side coil 41 in the first end slot 21 and a second side coil 42 in the second end slot 22.
The segment body 11 longitudinally extends along the longitudinal axis Y including a plurality of stator axial portions 34 separated by cooling ducts 35. Two adjacent stator axial portions 34 are separated by a respective cooling duct 35 for letting a cooling fluid flow in the cooling duct 35.

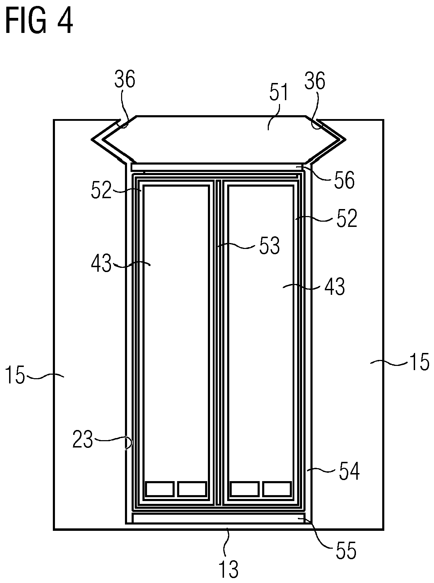

With reference to **Figure 4** an intermediate slot 23 comprised between two teeth 15 is represented. In the intermediate slots 23 two coils 43 are housed, radially extends between the stator yoke 13 and a wedge 51, closing the intermediate slot 23 at the radial ends of the two adjacent teeth 15. The wedge 51 is attached to the two notches 36 respectively provided at the radial ends of the two adjacent teeth 15. Each of the two coils 43 includes a main wall insulation 52.
In the intermediate slot 23 there are further provided:
- a radially oriented phase separator 53 interposed between the main wall insulations 52 of the two coils 43,
- a slot liner 54 surrounding the assembly including the coils 43, the main wall insulations 52 and the phase separator 53,
- a bottom slot filler 55 between the slot liner 54 and the stator yoke 13,
- a top slot filler 56 between the slot liner 54 and the wedge 51.

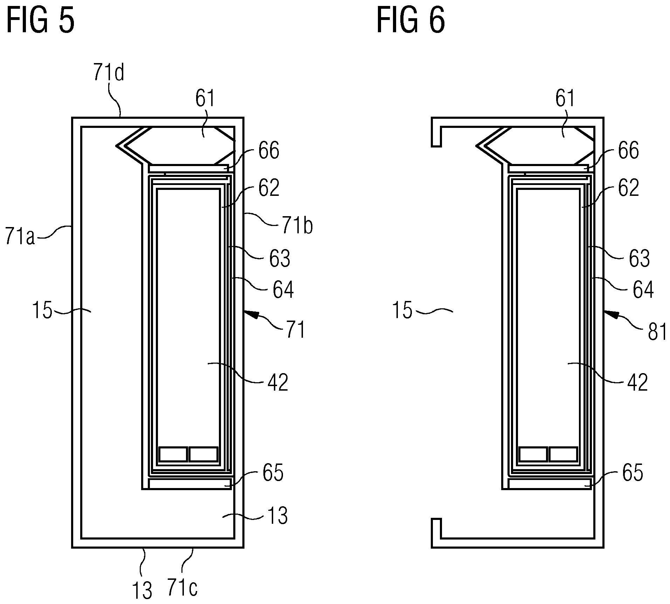

With reference to **Figures 5** and **6** the second end slot 22 is represented in two different embodiment of the present invention. The first end slot 21 is identical and symmetrical in shape. The second side coil 42 is radially extended in the second end slot 22 between the stator yoke 13 and a wedge 61, closing the second end slot 22 at the radial end of the adjacent tooth 15. The wedge 61 is attached to a notch 36 provided at the radial end of the adjacent tooth 15. The wedge 61 has a circumferential dimension corresponding to the second end slot 22, i.e. half of the wedge 51 of the intermediate slots 23. The side coil 42 includes a main wall insulation 62.
In the second end slot 22 there are further provided:
- a radially oriented phase separator 63 at the second side opening 32 of the segment body 11, contacting the main wall insulation 62,
- a slot liner 64 surrounding the assembly including the end coil 42, the main wall insulation 62 and the phase separator 63,
- a bottom slot filler 65 between the slot liner 64 and the stator yoke 13,
- a top slot filler 66 between the slot liner 64 and the wedge 61.
With reference to the embodiment of figure 5, a strap 71 is provided for retaining the second side coil 42 in the second end slot 22.
Analogously, at least another strap 71 (not shown in the attached figures), symmetrically disposed with respect to the strap 71 of the second end slot 22, is provided for retaining the first side coil 41 in the first end slot 21.
The strap 71 is transversal to the longitudinal axis Y and extends in a respective cooling duct 35.
In particular, according to embodiments of the present invention, the strap 71 may be orthogonal to the longitudinal axis Y.
The strap 71 is configured in a closed loop and includes:
- a first side 71a and second side 71b radially oriented and circumferentially distanced, the first side 71a extending through the respective cooling duct 35 and the second side 71b being adjacent to the second side opening 32,
- a third side 71c and fourth side 71d circumferentially oriented and radially distanced, the third side 71c being adjacent to a stator yoke 13 and the fourth side 71d being adjacent to a radial end of the segment body 11 radially opposite to the stator yoke 13, i.e. the fourth side 71d is adjacent to the wedge 61.

The strap 71 is made a non-conductive material e.g. glass fiber roving materials used for coil end supports in large electric machines or composite materials.

With reference to the embodiment of figure 6, a strap 81 is configured as a spring active between the stator yoke 13 of the segment body 11 and a radial end of the tooth 15 radially opposite to the stator yoke 13 and circumferential adjacent to the second end slot 22.
Analogously, at least another strap 81 (not shown in the attached figures), symmetrically disposed with respect to the strap 81 of the second end slot 22, is provided for retaining the first side coil 41 in the first end slot 21.
The strap 81 is made of stainless steel.
In the embodiment of figure 6, the segment body 11 may include or not include the cooling duct 35.

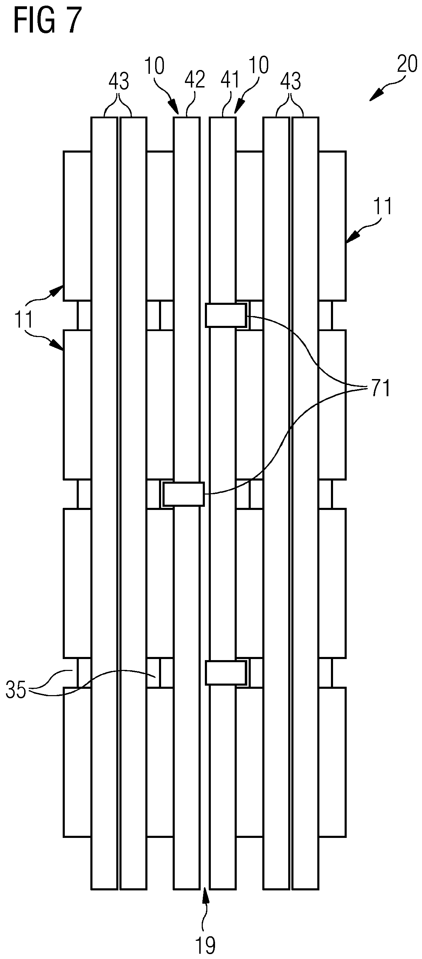

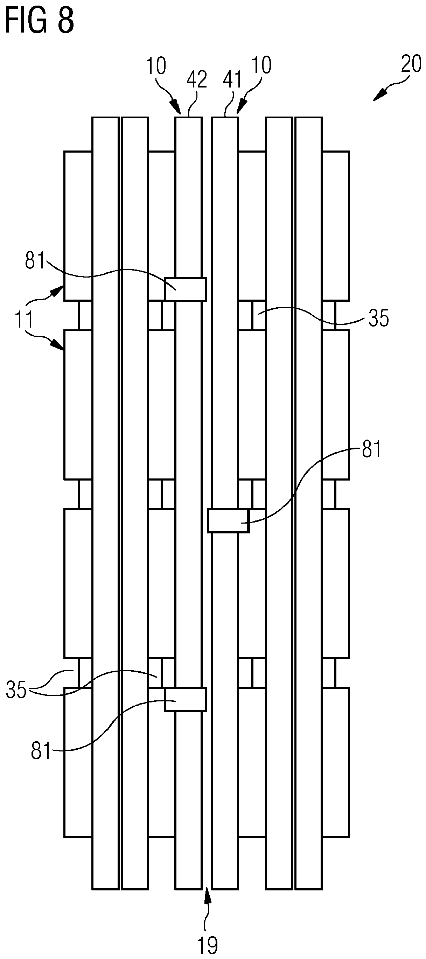

With reference to **Figures 7** and **8**, two different embodiment of a stator 20 according to the present invention are shown, each embodiment showing a respective stator 20 obtained by assembling a plurality of the stator segments 10 of figures 5 and 6, respectively.
The stator segment 10 may be manufactured according to following method:
- manufacturing a plurality of segment bodies 11, each segment body 11 circumferentially extending between a first end slot 21 and a second end slot 22, each of the first end slot 21 and of the second end slot 22 being circumferentially extended between a tooth 15 of the segment body 11 and a respective first side opening 31 and second side opening 32. The segment body 11 circumferentially spans between the first side opening 31 and the second side opening 32 and longitudinally extends along the longitudinal axis Y. The segment body 11 includes a plurality of stator axial portions 34, two adjacent stator axial portions 34 being separated by a cooling duct 35 for letting a cooling fluid flow in the cooling duct 35,
- providing a coil winding 12 in each segment body 11, the coil winding 12 including a first side coil 41 and a second side coil 42 respectively housed in the first end slot 21 and in the second end slot (22),
- providing at the first end slot 21 and the second end slot 22 at least two straps 71, 81 for respectively retaining the first side coil 41 and the second side coil 42 in the first end slot 21 and in the second end slot 22,
- applying vacuum pressure impregnation to each of the segment bodies 11, to the respective coil winding 12 and the respective straps 71, 81 for obtaining a respective segment 10,
- joining circumferentially together the plurality of segments 10 obtained in the previous step, in such a way that a first end slot 21 of one stator segment 10 of the plurality of stator segments 10 is adjacent to the second end slot 22 of another stator segment 10 of the plurality of stator segments 10.
At the segment gap 19, each stator segment 10 includes at the first end slot 21 and the second end slot 22 a respective first plurality of straps 71, 81 and a second plurality of straps 71, 81 distributed along the longitudinal axis Y. The first plurality of straps 71, 81 is alternated to the second plurality of straps 71, 81 along the longitudinal axis Y.

## Claims

1. Stator segment (10) for the stator (20) of an electrical generator (100) the stator segment (10) including a segment body (11) and a coil winding (12) arranged in the segment body (11),
the segment body (11) circumferentially extending between at least a first end slot (21) and a second end slot (22), each of the first end slot (21) and of the second end slot (22) being circumferentially extended between at least a tooth (15) of the segment body (11) and a respective first side opening (31) and second side opening (32), the segment body (11) circumferentially spanning between the first side opening (31) and the second side opening (32), the coil winding (12) including a first side coil (41) and a second side coil (42) respectively housed in the first end slot (21) and in the second end slot (22),
wherein the stator segment (10) includes at the first end slot (21) and second end slot (22) at least two straps (71, 81) for respectively retaining the first side coil (41) and the second side coil (42) in the first end slot (21) and in the second end slot (22).

2. Stator segment (10) according to claim 1, wherein the segment body (11) longitudinally extends along a longitudinal axis (Y) of the stator segment (10) and includes a plurality of stator axial portions (34), two adjacent stator axial portions (34) being separated by a cooling duct (35) for letting a cooling fluid flow in the cooling duct (35) and wherein at least one of the straps (71, 81) extends, at least partially, in a respective cooling duct (35).

3. Stator segment (10) according to claim 2, wherein at least one of the straps (71, 81) is transversal to the longitudinal axis (Y).

4. Stator segment (10) according to claim 3, wherein at least one of the straps (71) is configured in a closed loop and includes at least a first side (71a) extending through the respective cooling duct (35).

5. Stator segment (10) according to claim 3 or 4, wherein at least one of the straps (71) includes:
- a respective first side (71a) and second side (71b) radially oriented and circumferentially distanced with respect to the longitudinal axis (Y), the first side (71a) extending through the respective cooling duct (35) and the second side (71b) being adjacent to the respective first side opening (31) or second side opening (32),
- a respective third side (71c) and fourth side (71d) circumferentially oriented and radially distanced with respect to the longitudinal axis (Y), the third side (71c) being adjacent to a stator yoke (13) of the segment body (11) and the fourth side (71d) being adjacent to a radial end of the segment body (11) radially opposite to the stator yoke (13).

6. Stator segment (10) according to any of the previous claims, wherein at least one of the straps (71) is made a non-conductive material.

7. Stator segment (10) according to claim 1, wherein at least one of the straps (81) is configured a spring active between a stator yoke (13) of the segment body (11) and a radial end of a tooth (15) radially opposite to the stator yoke (13).

8. Stator segment (10) according to claim 7, wherein at least one of the straps (81) is made of stainless steel.

9. Stator segment (10) according to any of the previous claims, wherein the stator segment (10) includes at the first end slot (21) and/or the second end slot (22) respective pluralities of straps (71, 81) distributed along the longitudinal axis (Y).

10. Stator (20) of an electrical generator (100) including at least two stator segments (10) according to any of the previous claims, the two stator segments (10) being circumferentially joined to one another at a respective segment gap (19) in such a way that a first end slot (21) of one stator segment (10) is adjacent to the second end slot (22) of the other stator segment (10).

11. Stator (20) according to claim 10, wherein at the segment gap (19) each strap (71, 81) of one stator segment (10) is distanced along the longitudinal axis (Y) from each strap (71, 81) of the other stator segment (10).

12. Stator (20) according to claim 11, wherein each stator segment (10) includes at the first end slot (21) and the second end slot (22) a respective first plurality of straps (71, 81) and a second plurality of straps (71, 81) distributed along the longitudinal axis (Y) at the segment gap (19), the first plurality of straps (71, 81) being alternated to the second plurality of straps (71, 81) along the longitudinal axis (Y).

13. Stator (20) according to any of the preceding claims, wherein the coil winding (12) is a coil concentrated winding.

14. Stator (20) according to any of the preceding claims, wherein the coil winding (12) is a double-layer distributed winding.

15. Electrical generator (100) including a stator according to any of the claims 10 to 14.

16. Wind turbine (1) including an electrical generator (100) according to claim 15.

17. Method of manufacturing (1) a stator (20) of an electrical generator (100), the stator (20) including a plurality of stator segments (10), each stator segments (10) including a segment body (11) and a coil winding (12), the method including:
- manufacturing a plurality of segment bodies (11), each segment body (11) circumferentially extending between a first end slot (21) and a second end slot (22), each of the first end slot (21) and of the second end slot (22) being circumferentially extended between at least a tooth (15) of the segment body (11) and a respective first side opening (31) and second side opening (32), the segment body (11) circumferentially spanning between the first side opening (31) and the second side opening (32),
- providing a coil winding (12) in each segment body (11), the coil winding (12) including a first side coil (41) and a second side coil (42) respectively housed in the first end slot (21) and in the second end slot (22),
- providing at the first end slot (21) and the second end slot (22) at least two straps (71, 81) for respectively retaining the first side coil (41) and the second side coil (42) in the first end slot (21) and in the second end slot (22),
- applying vacuum pressure impregnation to each of the segment bodies (11), to the respective coil winding (12) and the respective straps (71, 81) for obtaining a respective segment (10),
- joining circumferentially together the plurality of segments (10) obtained in the previous step, in such a way that a first end slot (21) of one stator segment (10) of the plurality of stator segments (10) is adjacent to the second end slot (22) of another stator segment (10) of the plurality of stator segments (10).
